(19) Europäisches Patentamt / European Patent Office / Office européen des brevets

(11) **EP 1 131 599 B1**

(12) **FASCICULE DE BREVET EUROPEEN**

(45) Date de publication et mention
de la délivrance du brevet:
**30.07.2014 Bulletin 2014/31**

(21) Numéro de dépôt: **00920792.9**

(22) Date de dépôt: **07.04.2000**

(51) Int Cl.:
*G01B 11/10* (2006.01)    *G01M 11/00* (2006.01)
*G01N 21/88* (2006.01)

(86) Numéro de dépôt international:
**PCT/FR2000/000889**

(87) Numéro de publication internationale:
**WO 2000/062013 (19.10.2000 Gazette 2000/42)**

(54) **DISPOSITIF POUR LA MESURE DIMENSIONNELLE ET LE CONTROLE DES DEFAUTS DES FIBRES OPTIQUES EN PRODUCTION**

DIMENSIONSMESSUNG UND KONTROLLE AUF FEHLSTELLEN BEI OPTISCHEN FIBERN WÄHREND DER PRODUKTION

DEVICE FOR MEASURING THE DIMENSION AND CONTROLLING OF DEFECTS IN OPTICAL FIBRES DURING PRODUCTION

(84) Etats contractants désignés:
**AT BE CH CY DE DK ES FI FR GB GR IE IT LI LU MC NL PT SE**

(30) Priorité: **08.04.1999 FR 9904553**

(43) Date de publication de la demande:
**12.09.2001 Bulletin 2001/37**

(73) Titulaire: **Fardeau, Jean-François**
**13170 Les Pennes-Mirabeau (FR)**

(72) Inventeur: **Fardeau, Jean-François**
**13170 Les Pennes-Mirabeau (FR)**

(74) Mandataire: **Verriest, Philippe et al**
**Cabinet Germain & Maureau**
**12, rue Boileau**
**69006 Lyon (FR)**

(56) Documents cités:
EP-A- 0 608 538    US-A- 4 650 322
US-A- 5 513 004

**Description**

La présente invention concerne une méthode pour la mesure absolue à grande vitesse et de grande précision du diamètre des fibres transparentes et le contrôle des défauts internes et superficiels.

Depuis 1970 de nombreux travaux ont été consacrés à l'étude de la propagation de la lumière perpendiculairement à l'axe de la fibre. Ces travaux ont donné lieu au fil des années à de nombreuses méthodes et solutions pour la mesure dimensionnelles des fibres et le contrôle des défauts. Parmi ces travaux auxquels nous nous sommes référés :

- [1] Thèse de l'université de Saint-Etienne, par Lionel Delaunay, 28/03/1986
- [2] US Patent n° 3,982,816 de Laurence S. Watkins, Sept. 28, 1976
- [3] US Patent n° 4,027,977 de Ralph E. Frazee, June 7th, 1977.
- [4] US Patent n° 4,280,827 de Edward F. Murphy, July, 28th, 1981.
- [5] US Patent n° 4,176,961 de Ralph E. Frazee, December 4th, 1979,
- [6] EP 0 549 914 B1, de Button Leslie James, Corning Inc. 07/05/1997 et documents antérieurs.
- [7] 3396052966 FCOTAC, Alcatel FO

Un procédé de mesure de diamètre d'une fibre optique est aussi décrit dans le document US 5 513 004.

La production des fibres optiques de télécommunication par fibrage, demande des dispersions autour du diamètre nominal spécifié de plus en plus faibles et une absence de défaut critique pour les caractéristiques mécaniques et optiques des fibres mais surtout pour leur durée de vie. C'est le cas des défauts dans le verre, «air-line» ou dans le revêtement, «bulles», «délaminations», ainsi que l'excentricité du verre dans son revêtement polymère. Enfin, l'augmentation des vitesses de fibrage et les fluctuations hautes fréquences du diamètre des fibres demandent des instruments plus rapides que ceux couramment utiliser pour visualiser ces phénomènes et les réduire.

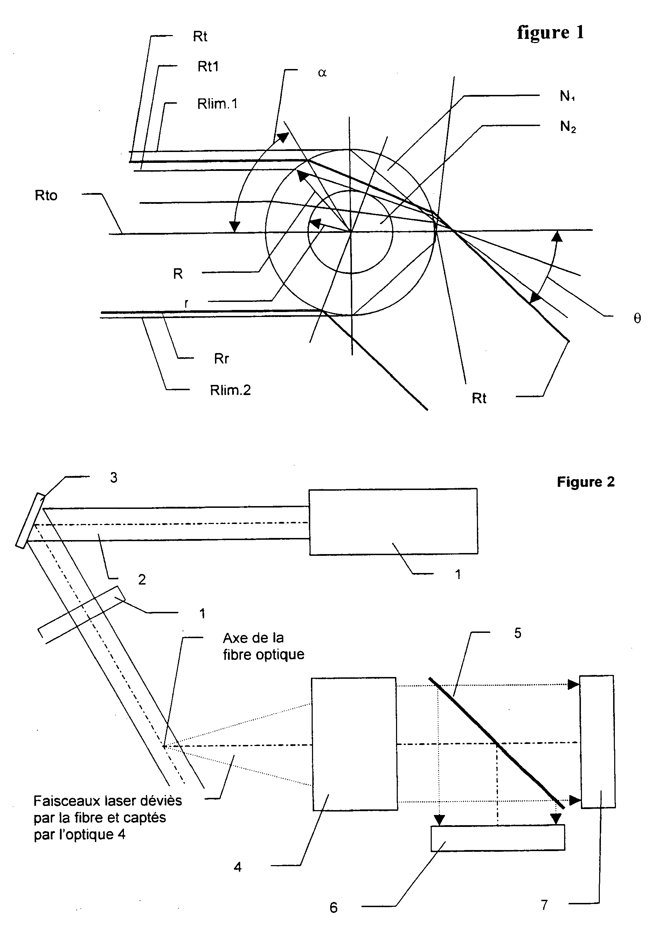

La présente invention concerne une méthode et un montage permettant aussi bien la mesure dimensionnelle et le contrôle des fibres de verre avant revêtement (bare fibre) que la mesure dimensionnelle et le contrôle des revêtements (coating). D'une façon plus générale elle s'applique à toute tige de section circulaire, optiquement transparente, correspondant à la figure 1 et présentant un profil d'indice R1, N1 et R2, N2. Aucun appareil connu à ce jour ne permet de réaliser sans contact, à plus de 50 KHz, et de façon statique une mesure absolue du diamètre avec des résolutions de l'ordre de quelques centièmes de micron incluant la détection des défauts.

Les références [1] et [2] résument les principes fondamentaux de la propagation de la lumière dans une fibre transparente, telle que décrite figure 1, en particulier lorsqu'elle est illuminée par un champ de lumière monochromatique colimatée, cohérent, perpendiculaire à l'axe de la fibre. La déviation de la lumière par la fibre, produit un système de franges d'interférométrie dont les périodes et les phases dépendent des profils d'indices ; diamètres, matières, homogénéité, concentricité. De l'analyse de ces franges, selon les angles de mesure, on en déduit des informations précises sur la conformité de la fibre par rapport à un modèle défini comme référence absolue. La qualité du signal mesuré représenté par le contraste et la régularité des franges ainsi que par l'énergie du signal, dépend de la qualité optique de la fibre, c'est à dire l'absence de défauts, l'homogénéité, la régularité géométrique. L'analyse continue du contraste des franges à grande vitesse permet de détecter des très petits défauts comme les bulles dans les revêtements polymères.

La référence [1] décrit de façon détaillée les relations de propagation et en déduit une méthode de mesure rapide des variations du diamètre et une méthode de mesure du diamètre par étalonnage sur une fibre étalon. Les documents cités décrivent des montages de mesure des variations de diamètre par comptage du glissement des franges ou de diamètre par mesure de la période des franges en référence à une période de fibre étalon. Le document [6] utilise une méthode de traitement par transformée de Fourrier pour la mesure du diamètre et la détection des petits défauts dans le verre.

La figure 1 rappelle les phénomènes de propagations dans une structure cylindrique transparente constituée d'un centre de rayon «r» et d'indice $N_1$, et d'une enveloppe de rayon «R» et d'indice $N_2$, dont le rapport r/R est, au maximum de l'ordre de 0.5, cas habituel des fibres de télécommunication. Cette structure représente en particulier soit une fibre de verre multi-mode avec son coeur (62,5/125$\mu$m) soit une fibre monomode, soit enfin une fibre verre revêtue de son coating (125/245$\mu$m). On considère voisins les indices des deux couchent de coating par rapport au verre pour utiliser le même modèle. On peut cependant appliquer l'invention avec des modèles prenant en compte les différences d'indices des couches de coating.

La propagation des rayons lumineux au travers de la fibre à été largement étudiée et nous n'utiliserons que les résultats de ces travaux. Les faisceaux réfléchis (Rr) et transmis (Rt) interfèrent à l'infini tout autour de la fibre. Le modèle qui décrit la contribution des faisceaux au système de franges s'exprime par :

$$(1)\ S = \Sigma_i \psi_i(n,\ \theta,\ D,\ \lambda),$$

avec

$\psi i$ Relation de propagation de chaque raie laser contribuant à la constitution du signal au même point.

$n$ indice N1 de la matière

$\theta$ Angle de mesure

D diamètre extérieur

$\lambda$ Longueur d'onde du laser

Dans une zone angulaire $\theta$ comprise entre 40° et 80°, deux fonctions $\Psi$ correspondant aux rayons Rt et Rr, dominent largement les autres. Nous rassemblons la contribution des autres faisceaux résiduels (réflexions multiples dans la fibre) sous le caractère $\varepsilon$ ce qui conduit à réduire alors la relation (1) à :

$$(2) \quad S = \Psi_{Rt} + \Psi_{Rr} + \varepsilon$$

La différence de marche $\Delta$ des deux faisceaux $\Psi$ s'exprime en fonction du diamètre extérieur de la fibre «D», de l'indice du revêtement extérieur «n = $N_1$», de la longueur d'onde «$\lambda$» et de l'angle de la mesure «$\theta$», selon les références [1] et [2].

$$(3) \quad \Delta = D^*f(n,\theta) + \lambda/4$$

avec

$$(4) \quad f(n,\theta) = \sin(\theta/2) + [n^2 + 1 - 2^*n^*\cos(\theta/2)]^{1/2}$$

soit en nombre de franges :

$$(5) \quad N = \Delta/\lambda = (D/\lambda)^*f(n,\theta) + \tfrac{1}{4}$$

$$(6) \quad N(0) = (D/\lambda)^*(n^2 - 2^*n+1) + \tfrac{1}{4}$$

Si on connaît avec précision chaque paramètre, $\lambda$, $\theta$ et n, les relations (3) et (4) constituent un modèle de référence pour la mesure absolue de D, sans contrainte de calibration par une fibre étalon. $\lambda$, est un paramètre mesurable précisément ou connu du laser (He). « N1 » est l'indice connu précisément de la couche externe de la fibre. $\theta$, doit être mesuré sur l'instrument. Chaque point élémentaire du capteur 6 (figure (2) utilisé doit donc correspondre à une valeur angulaire précise.

L'originalité de la méthode présentée repose, d'une part, sur le traitement numérique du signal qui identifie un modèle paramétrable sur le signal et qui conduit directement à la mesure absolue du diamètre, d'autre part, une méthode analogique de mesure rapide des variations de diamètre à très grande résolution, et enfin, sur la corrélation des résultats des méthodes numériques et analogiques pour fournir une méthode de mesure rapide et absolue. Un élément fondamental de la méthode réside dans la qualité optique du signal, caractérisé par le contraste des franges. Le contrôle analogique permanent du contraste, inclus dans l'appareil, conduit aussi à la détection des défauts éventuels de la fibre.

Mesure absolue du Diamètre

Cette mesure se réalise par un traitement numérique d'un signal issu d'un capteur 6 (figure 2), constitué dans notre cas d'une barrette CCD, placée entre 40 et 80° par rapport à l'origine du faisceau laser. Dans le montage expérimentale, la fenêtre angulaire de la barrette est de 24°. Le traitement numérique se caractérise par une faible fréquence des mesures, actuellement de l'ordre de 10Hz.

Un modèle de représentation du système de franges produit par Rt et Rr peut s'écrire :

$$(7) \quad M = [A/(B+\theta)]^*[1 + Sin^2\{N(D,\theta)^*\pi+\varphi\}],$$

et

$$(8) \quad S = M + \varepsilon$$

L'identification du modèle M le plus proche du système de franges S conduit à déterminer A, B, D et $\varphi$ minimisant le résiduel $\varepsilon$. Toutes les méthodes d'identification sont utilisables. Pour notre part nous employons une méthode de minimisation par les moindres carrés, d'une part sur la période par optimisations de D et $\varphi$, puis sur l'amplitude. Les paramètres A et B permettent la recherche d'un profil d'amplitude approché permettant la détection des défauts. Leurs valeurs sont approximativement proportionnelles au diamètre (énergie du signal) ce qui permet de les initialiser après réglage de l'appareil. Seule la valeur de D, dans N(D, $\theta$), nous intéresse pour la mesure. $\varphi$ est un paramètre qui permet d'ajuster au mieux la phase du modèle sur celui du signal.

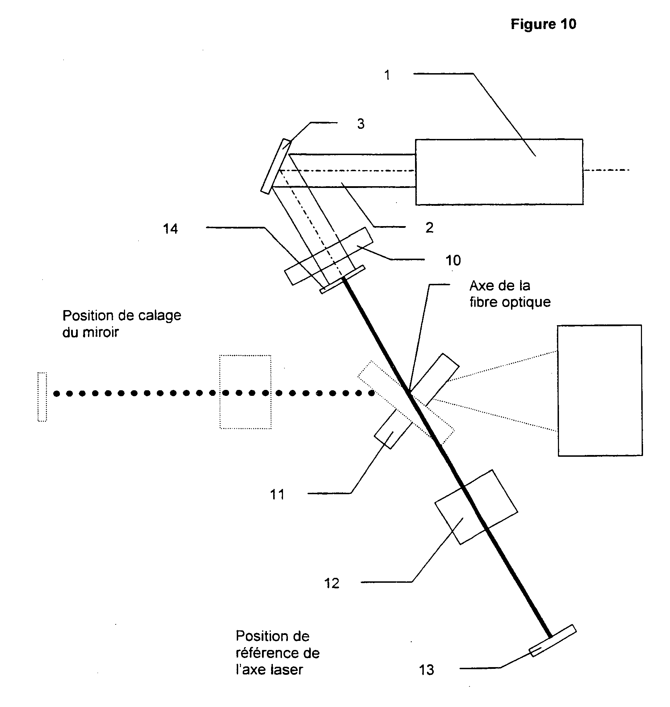

L'étalonnage angulaire du capteur se fait par référence à la direction de l'axe d'incidence du laser de mesure pris comme valeur angulaire 0. Pour identifier les positions angulaires des pixels, on utilise le montage de la figure 10. Le banc optique de l'appareil de mesure est monté sur un banc de test constitué d'une part d'une fente optique (14) pour limiter le champ et l'énergie du laser sur les capteurs, d'un codeur angulaire de grande précision, centré sur l'axe de la fibre (axe de l'appareil), d'un ensemble solidaire, constitué d'une optique (12) de focalisation du faisceau laser et d'un capteur (13) donnant une tension proportionnelle à la position du spot laser. L'ensemble (12)(13) est tourné angulairement jusqu'à ce que le capteur (13) indique la position du faisceau laser à 0 volt. Le codeur angulaire est alors rendu solidaire de l'ensemble (12)(13) et initialisé à zéro sur l'axe du laser. On tourne alors l'ensemble (12)(13) d'un angle quelconque, de l'ordre de 110° par exemple pour permettre de placer et référencer angulairement un miroir sur l'axe de la fibre. On ajuste le miroir et l'ensemble (12)(13) pour retrouver une indication de 0 volt sur le capteur (13). On rend alors le miroir solidaire du codeur, on relève la valeur angulaire $\theta_0$ correspondant à 0 volt du codeur et l'on désolidarise l'ensemble (12)(13). Le miroir est alors référencé angulairement. L'axe du laser dévié par le miroir sera alors A = 2*($\pi$ - $\theta$) - $\theta_0$. En tournant le miroir (11) on déplace le spot laser sur les capteurs 6 et 7. On peut donc relever point à point les positions angulaires des pixels et identifier la fonction de transfert angle = f(Pixels) incluant le système optique 4.

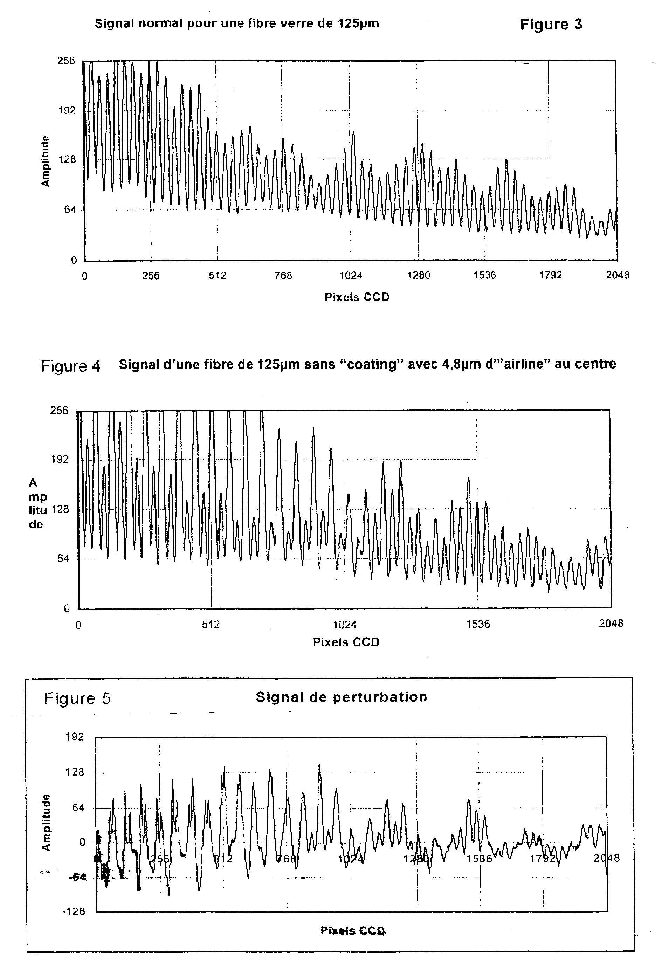

Le système de franges dans une zone angulaire de 24° prise entre 40 et 80°, pour une fibre D=125$\mu$m, $\lambda$= 780nm et n = 1,478 est montré figure 3. La mesure précise de l'évolution de la période du signal mesuré en fonction de l'angle va permettre d'identifier D dans le modèle.

Une première approche se fait en identifiant les paramètres D et $\varphi$, par minimisation des différences entre le modèle et le signal mesuré, entre $\theta$1 et $\theta$2 qui correspondent à la plage angulaire de la barrette CCD. Dans cette approche, on ne prend pas en compte la phase du système de frange mais uniquement la période en fonction de l'angle.

Nous obtenons une stabilité et reproductibilité des mesures meilleures que 0,02$\mu$m. L'incertitude totale calculée sur D est inférieure à $\pm$ 0,15$\mu$m. Ces incertitudes sont les suivantes :

- Indice : de la silice connue avec une incertitude négligeable en fonction de la longueur d'onde. Pour les coating, les paramètres permettant de calculer les indices sont fournis avec précision par les fabriquants.
- Longueur d'onde du laser : Pour un laser gaz, les valeurs sont connues aussi avec grande précision et incertitude négligeable. Pour une diode laser stabilisée, la longueur d'onde est mesurée à $\pm$ 0,2 nm sur 780, soit $\pm$ 0,025%.
- Valeurs angulaires : La résolution du capteur est de 3 secondes d'arc avec une incertitude totale cumulée de la calibration de l'ordre de 1 minute d'arc, soit sur 70° (4200 minutes d'arc) 0,024.

L'incertitude totale de l'appareil serait donc de 0,05% du diamètre soit sur 125$\mu$m, $\pm$ 0,06$\mu$m. A ces incertitudes, il faut ajouter les imperfections de la fibre (ovalité, perturbations optiques locales, les signaux résiduels « $\varepsilon$ » qui réduisent l'incertitude totale à une valeur estimée de $\pm$ 0,15$\mu$m.

La plage angulaire de mesure située entre 58 et 82° correspond à environ 30 franges. La Relation (6) montre qu'à $\theta$ = 0, N(0) varie proportionnellement au Diamètre, c'est à dire que la phase de Rt, donc de S à $\theta$ = 0 varie proportionnellement au diamètre. Si le modèle est assez sûre pour déterminer la phase de l'onde (Rt, fig. 1) traversant la fibre pour $\theta$ = 0, alors il est envisageable de mesurer avec une très grande précision le diamètre de la fibre. Dans ce cas la phase « $\varphi$ » identifiée en première approche prend toute sa signification. Il est alors possible d'envisager, à partir de la plage angulaire de mesure du CCD, de lever te doute sur le nombre de franges du modèle, entre $\theta$ = 0 et une frange sur le CCD. En effet l'incertitude totate des mesures faites dans une fenêtre angulaire de 24° est de 0,15%. Le nombre de franges entre 0 et 70° est d'environ 180 à $\lambda$ = 780 nm. L'incertitude sur le nombre de franges entre 0 et 70° revient à 0,15%*180 = 0,28 soit largement moins qu'une demi-frange. On ajoute alors au modèle la phase de S à l'origine des angles pour obtenir une précision de mesure très améliorée. La fonction (4) est prise en compte dans la plage angulaire de 0 à $\theta_o$ sur le CCD.

L'intérêt de cette méthode de mesure par adaptation du modèle vient de ce qu'elle s'affranchit des fluctuations liées aux variations des modulations résiduelles du signal dans la plage angulaire de mesure. Elle prend en effet en compte le modèle de N dans la totalité de l'angle de mesure entre 0° et $\theta$. Ceci confère à la mesure numérique une très grande stabilité, du même ordre que la mesure analogique que nous abordons ci-après.

Il subsiste cependant les incertitudes liées à la dispersion géométrique de la fibre par rapport au modèle ayant conduit à l'établissement des relations de base : circularité de la fibre, défauts de cylindricité, ainsi que des défauts liés à la divergence du faisceau laser. Bien que ces défauts soient très limités ramenés au diamètre, ils ne permettent pas cependant d'espérer réaliser un appareil de mesure absolu dans des précisions correspondant aux résolutions atteintes. D'autre part, les meilleures méthodes de mesure qui pourraient nous permettre de valider les résultats métrologiques ne font pas mieux à ce jour que $\pm 0,15\mu m$. Cela signifie que, dans cette configuration, la première évaluation, par différence des angles, est suffisante.

Mesures rapides des variations de Diamètre

Par rapport à une position angulaire donnée, le glissement d'une frange représente le résultat de la variation de toutes les périodes des franges entre l'origine angulaire et la position angulaire de la mesure plus la variation de phase à l'origine angulaire. Cette méthode de mesure de phase au point $\theta$ présente l'intérêt d'être très stable, très reproductible, très sensible aux variations du diamètre et peu sensible aux modulations résiduelles du système de franges. Elle diffère de la méthode de mesure numérique mais conduit aux même résolutions. Cette méthode ne donne que les variations du diamètre mais a grande vitesse, en opposition à la méthode absolue, numérique, mais lente. Elles sont donc complémentaires pour assurer à la fois la mesure absolue et la grande vitesse.

La variation du Diamètre conduisant à ce glissement s'exprime :

$$(9)\ dD = -\lambda * dN/f(n,\theta) \quad [1]$$

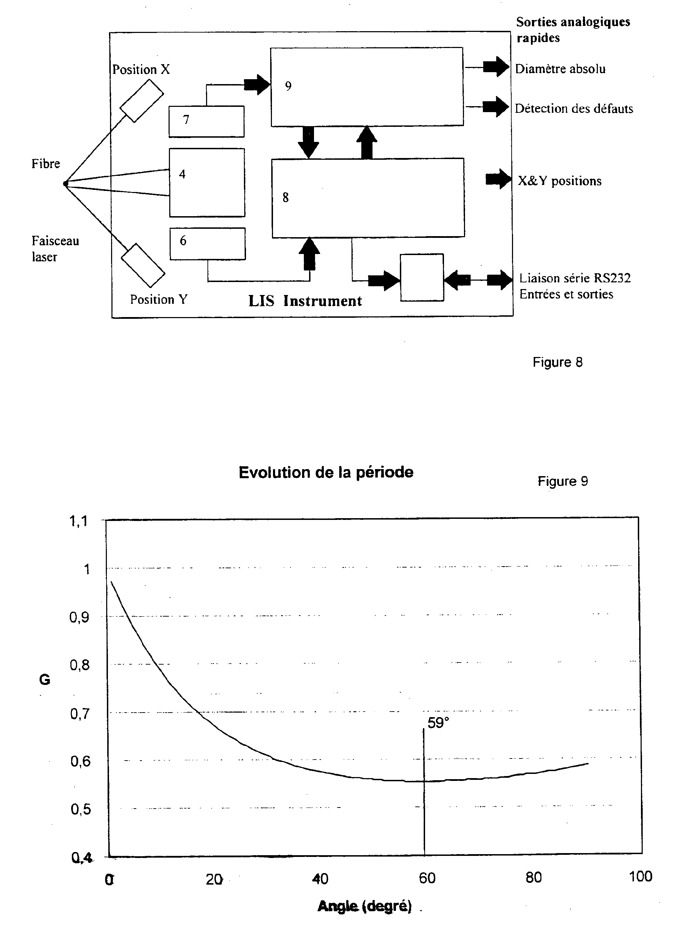

Le pas des franges en fonction de l'angle $\theta$ est montré Figure 9. On voit que le pas des franges reste sensiblement constant dans la zone 60°$\pm$10°. Cette caractéristique permet de placer dans cette zone des capteurs espacés d'un pas constant correspondant au pas des franges. Elle est aussi intéressante pour la mesure de la période (fréquence) par transformée de Fourrier [6].

De la relation (9) on peut.extraire une mesure rapide des variations du Diamètre à grande vitesse et grande résolution. Par exemple, pour un angle de 70°, une longueur d'onde de 780 nm et un indice du verre de 1,478, le glissement de dN =¼ de frange représente une variation du diamètre de $0,13\mu m$. Dans notre méthode, on obtient facilement une résolution de 1/32 de frange, soit $0,01\mu m$.

On trouve dans la littérature des montages pour la mesure des variations de Diamètre. Ils s'appuient sur des méthodes de comptage des signaux S1, S2 binarisés dont la résolution minimum reste de % de frange. La différence de notre méthode consiste à réaliser une binarisation du signal des franges de façon différente qui va permettre de compter le glissement par incrément de % de frange également mais aussi d'interpoler ce glissement à l'intérieur d'un incrément.

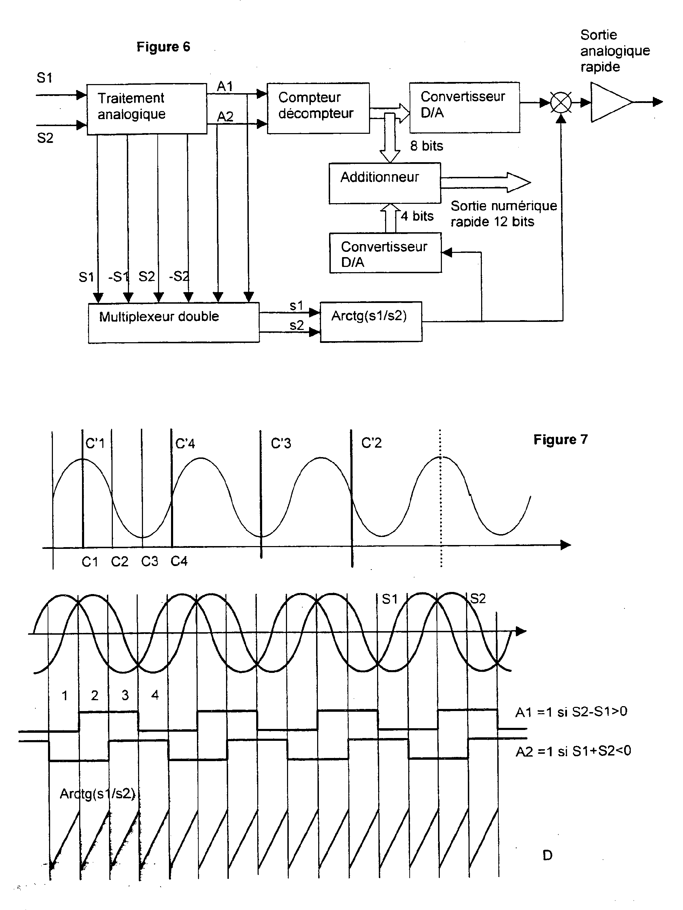

On réalise cette mesure en plaçant des capteurs à un pas correspondant à une proportion du pas nominal des franges, voir Figure 7. L'intérêt de cette approche est multiple :

- La mesure ne prend pas en compte les modulations résiduelles d'amplitude du signal ni les fluctuations des périodes mais seulement la phase des franges par rapport aux capteurs. Cela rend la mesure insensible aux modulations de l'amplitude des franges.
- Le glissement de la phase des franges résulte de la variation de toutes les franges depuis l'origine angulaire (axe du laser) ce qui fourni une très grande sensibilité. On obtient une résolution et une reproductibilité de l'ordre de $0,01\mu m$.
- Cette mesure permet la mise en oeuvre de méthodes analogiques continues avec des bandes passantes élevées, 75 Khz dans notre cas.

Les Figures 6 et 7 présentent le principe de cette mesure haute résolution. Comme il est déjà connu, on place une succession de capteurs optiques (pixels) espacés d'un nombre impair de ¼ de frange du signal optique. On peut par exemple utiliser les capteurs C1 à C4 (Figure 7) qui sont espacés de ¼ de frange ou C'1 à C'4 qui sont espacés de ¾ de frange. Cette dernière disposition permet d'utiliser des capteurs avec des pas entre pixels plus importants que le pas des franges à mesurer. On Reproduit sur plusieurs périodes l'association des capteurs C1 à C4 et on les connecte en parallèle de façon à additionner les signaux des Ci de même indice entre eux. Les surfaces sensibles des capteurs ne doivent pas excéder ¼ du pas des franges pour obtenir un bond contraste dans les signaux. On choisit 1/5 dans notre cas avec un résultat satisfaisant. On réalise alors la somme analogique suivante des signaux :

- S1 = C1-C3

- S2 = C2-C4

pour éliminer les composantes continues.

Au lieu de binariser S1>0 et S2>0, comme couramment pratiqué pour obtenir 2 signaux de comptage/décomptage, on binarise les conditions suivantes :

- A1 = f[S1-S2>0]
- A2 = f[S1+S2<0]

Les deux signaux binaires A1 et A2 vont servir à deux fonctions, l'une de comptage et décomptage du glissement de S1 et S2 par ¼ de période, de façon classique, l'autre à commuter les signaux S1, -S1, S2 et -S2 sur un circuit de calcul de l'arctgente (s1/s2) en fonction des quatre combinaisons entre A1 et A2 repérées 1 à 4 dans la Figure 7 (/Ai complément logique de Ai).

1) /A1*/A2 : s1/s2 = S2/S1
2) A1*/A2 : s1/s2 = -S1/S2
3) A1*A2 : s1/s2 = -S2/-S1
4) /A1*A2 : s1/s2 = S1/-S2

La figure 6 montre un schéma fonctionnel de la réalisation d'une mesure analogique sur ce principe à partir des signaux S1 et S2. Les signaux A1et A2 pilotent un double multiplexeur qui commute alternativement les quatre entrées S1, -S1, S2, -S2 vers s1 et s2 selon les indications ci-dessus. Les essais de mesures analogiques ont fourni l'enregistrement ENR1 en terme de reproductibilité.

A l'initialisation, on associe les méthodes de mesures numériques et analogiques pour filtrer de façon efficace les dispersions entre les deux méthodes. Ceci est intéressant en production ou les fluctuations du signal entre deux mesures peuvent être considérées comme aléatoires. Pour cela on compare les valeurs mesurées en numérique et analogique, échantillonnées aux même instants, en faisant la moyenne des «n» dernières mesures. Les dispersions résiduelles de la mesure numérique dans la première phase du traitement (diamètre calculé entre deux valeurs angulaires) sont alors pondérées et la valeur absolue analogique est initialisée selon la différence des moyennes et non sur la différence des mesures instantanées.

Détection des défauts

Les défauts sont essentiellement des petits tubes d'air, «air-line», dans les fibres verre, voire des défauts localisés, superficiels.

Dans les revêtements (coating), ils comprennent les bulles d'air, les inclusions de matières infondues, les délaminations (lame de gaz entre le verre et le revêtement), les sur épaisseurs, les sous épaisseurs et l'excentricité.

Dans ce montage, nous nous limitons à la détection temps réel des perturbations optiques produites par les air-lines, les bulles, les délaminations et les inclusions. Les variations de diamètres sont prises en compte simplement par comparaisons de la sortie analogique rapide avec des seuils programmés ou réglés.

Deux paramètres sont utilisés pour caractériser la qualité du signal optique : l'énergie, qui s'accroît avec la taille d'un air-line, mais surtout le contraste des franges (différence entre les maxima et les minima de S1 et S2), qui constitue un élément fondamental pour cette méthode de mesure. L'absence de contraste sur les franges empêche effectivement la mesure.

L'énergie temps réel est obtenue par la somme des courants provenant des photodiodes du capteur analogique. Le contraste temps réel est obtenu en prenant le maximum des quatre signaux S1, -S1, S2, -S2. Ce signal est naturellement fluctuant puisque les Si sont des sinusoïdes.

L'apparition d'un défaut, même petit, produit soit une chute nette du contraste, soit une saturation. Quel que soit le type de défaut, le contraste réagit toujours de façon beaucoup plus sensible que l'énergie. C'est ce paramètre que nous retenons pour la détection des défauts.

Pour les défauts les plus fins de type air-line, le traitement numérique, extrait la composante du signal mesuré qui ne correspond pas à une distribution acceptable de l'amplitude et de la période des franges (voir figure 3 (signal normal), figure 4 (signal perturbé), figure 5, différence des signaux des figures 3 et 4).

**Revendications**

1. Procédé de mesure du diamètre d'une fibre optique et de détection de défauts dans cette fibre, comprenant les étapes consistant à :

   - diriger un faisceau laser perpendiculairement à l'axe de la fibre, pour créer un système de franges d'interférence ;
   - prévoir un premier capteur (6) apte à recevoir le système de franges et une première carte de traitement (8) numérique apte à analyser le signal émis par le premier capteur (6) ;

   **caractérisé en ce que** le procédé comprend en outre les étapes consistant à :

   - prévoir un deuxième capteur (7) apte à recevoir le système de franges et une deuxième carte de traitement (9) analogique apte à analyser le signal émis par le deuxième capteur (7) ;
   - calibrer angulairement les premier et deuxième capteurs (6, 7) ;
   - réaliser une mesure absolue et périodique du diamètre (D) de la fibre par détermination, au moyen du premier capteur (6) et de la première carte de traitement (8), des paramètres A, B, D, φ permettant l'identification optimale du système de franges et du modèle physique suivant:

$$M = \frac{A}{B+\theta} \times \left[1 + \sin^2\{N(D,\theta) \times \pi + \varphi\}\right] \tag{7}$$

$$N(D,\theta) = \frac{D}{\lambda} \times \left[\sin\frac{\theta}{2} + (n^2 + 1 - 2n \times \cos\frac{\theta}{2})^{1/2}\right] + \frac{1}{4} \tag{5, 4}$$

   où M est l'amplitude du signal mesuré par le premier capteur (6), N est le nombre de franges, λ est la longueur d'onde du laser et θ est l'angle de mesure ;
   - en parallèle, réaliser une mesure relative et continue des variations du diamètre (D) de la fibre par analyse, au moyen du deuxième capteur (7) et de la deuxième carte de traitement (9), du glissement des franges, selon la relation suivante :

$$dD = -\lambda \times \frac{dN}{\sin\frac{\theta}{2} + (n^2 + 1 - 2n \times \cos\frac{\theta}{2})^{1/2}} \tag{9, 4}$$

   ladite deuxième carte de traitement (9), analogique, étant initialisée par ladite première carte de traitement (8), numérique, de sorte que le procédé permet d'obtenir une mesure continue, rapide et absolue du diamètre (D) de la fibre.

2. Procédé selon la revendication 1, **caractérisé en ce qu'**on prévoit un système optique (4) projetant une portion des faisceaux laser déviés par la fibre optique, dans une plage angulaire située entre 40 et 80°, sur les deux capteurs (6, 7), lesdits capteurs (6, 7) étant optiquement alignes et situés dans le plan focal du système optique (4).

3. Procédé selon la revendication 1 ou 2, **caractérisé en ce que** l'étape de calibration angulaire des premier et deuxième capteurs (6, 7) est effectuée à l'aide d'un banc de calibration externe au capteur, permettant de repérer avec précision l'axe du faisceau laser pour référencer le codeur angulaire et, par un miroir solidaire du codeur angulaire, de dévier le laser angulairement, sur plusieurs points des capteurs, à travers le système optique, pour repérer précisément les positions angulaires de ces points.

**4.** Procédé selon l'une des revendications 1 à 3, **caractérisé en ce qu'**il comprend en outre les étapes consistant à comparer deux signaux analogiques (S1, S2) du deuxième capteur (7) pour générer deux signaux logiques(A, B) permettant, d'une part, le comptage numérique du glissement des franges par quart de période, d'autre part, d'interpoler entre chaque commutation de A ou B la variation continue de la phase des franges en réalisant l'arctangente de (S1 / S2), enfin d'ajouter les deux résultats - comptage plus interpolation - pour fournir une mesure continue, rapide, à haute résolution, dans une large plage de variation du diamètre.

**5.** Procédé selon l'une des revendications 1 à 4, **caractérisé en ce qu'**il comprend en outre les étapes consistant à utiliser la perte du contraste des franges pour détecter, en temps réel, par voie analogique, la présence de défauts dans la fibre et par l'utilisation de la différence des amplitudes du modèle et du signal réel pour détecter, par traitement numérique, les très petits défauts.

**Patentansprüche**

**1.** Verfahren zur Messung des Durchmessers einer optischen Faser und zum Nachweis von Defekten in dieser Faser, umfassend die Folgenden Schritte:

- Ausrichten eines Laserstrahls senkrecht zur Achse der Faser, um ein System von Interferenzstreifen zu erzeugen;
- Vorsehen eines ersten Sensors (6) der dazu ausgelegt ist, das Streifensystem zu empfangen, und einer ersten digitalen Verarbeitungskarte (8), die dazu in der Lage ist, das Signal zu analysieren, das vom ersten Sensor (6) ausgesendet wurde;

**dadurch gekennzeichnet, dass** das Verfahren außerdem die Folgenden Schritte umfasst:

- Vorsehen eines zweiten Sensors (7) der dazu ausgelegt ist, das Streifensystem zu empfangen, und einer zweiten analogen Verarbeitungskarte (9) die dazu in der Lage ist, das Signal zu analysieren, das vom zweiten Sensor (7) ausgesendet wurde;
- Winkelkalibrieren des ersten und des zweiten Sensors (6, 7);
- Durchführen einer absoluten und periodischen Messung des Durchmessers (D) der Faser durch die Bestimmung, mit Hilfe des ersten Sensors (6) und der ersten Verarbeitungskarte (8) der Parameter A, B, D, φ, die die optimale Identifizierung des Streifensystems und des folgenden physischen Modells ermöglichen:

$$M = \frac{A}{B+\theta} \times \left[1 + \sin^2\left\{N(D,\theta) \times \pi + \varphi\right\}\right] \qquad (7)$$

$$N(D,\theta) = \frac{D}{\lambda} \times \left[\sin\frac{\theta}{2} + (n^2 + 1 - 2n \times \cos\frac{\theta}{2})^{1/2}\right] + \frac{1}{4} \qquad (5),\ (4)$$

wobei M die Amplitude des vom ersten Sensor (6) gemessenen Signals ist, N die Anzahl der Streifen ist, $\lambda$ die Wellenlänge des Lasers und $\theta$ der Messwinkel ist;
- parallel dazu Durchführen einer relativen und ununterbrochenen Messung der Variationen des Durchmessers (D) der Faser durch Analyse mit Hilfe des zweiten Sensors (7) und der zweiten Verarbeitungskarte (9) des Gleitens der Streifen gemäß dem Folgenden Verhältnis:

$$dD = -\lambda \times \frac{dN}{\sin\frac{\theta}{2} + (n^2 + 1 - 2n \times \cos\frac{\theta}{2})^{1/2}} \qquad (9),\ (4)$$

wobei die zweite analoge Verarbeitungskarte (9) von der ersten digitalen Verarbeitungskarte (8) initialisiert wird, so dass das Verfahren ermöglicht, eine ununterbrochene, schnelle und absolute Messung des Durchmessers (D) der Faser zu erhalten.

**2.** Verfahren nach Anspruch 1, **dadurch gekennzeichnet, dass** ein optisches System (4) vorgesehen wird, das einen Teil der Laserstrahlen, die von der optischen Faser umgeleitet werden, in einem Winkelbereich, der sich zwischen 40 und 80° befindet, auf die zwei Sensoren (6, 7) projiziert, wobei die Sensoren (6, 7) optisch ausgefluchtet sind und sich auf der Brennebene des optischen Systems (4) befinden.

**3.** Verfahren nach Anspruch 1 oder 2, **dadurch gekennzeichnet, dass** der Schritt des Winkelkalibrierens des ersten und des zweiten Sensors (6, 7) mit Hilfe einer Kalibrierungsbank außerhalb des Sensors durchgeführt wird, die ermöglicht, die Achse des Laserstrahls mit Präzision zu lokalisieren, um den Winkelcodierer zu referenzieren, und, durch einen Spiegel, der mit dem Winkelcodierer einstückig ist, den Laser in einem Winkel auf mehrere Sensorpunkte auf dem optischen System umzuleiten, um die Winkelpositionen dieser Punkte präzise zu lokalisieren.

**4.** Verfahren nach einem der Ansprüche 1 bis 3, **dadurch gekennzeichnet, dass** es außerdem die Schritte umfasst, die darin bestehen, zwei analoge Signale (S1, S2) des zweiten Sensors (7) zu vergleichen, um zwei digitale Signale (A, B) zu erzeugen, die einerseits die digitale Zählung des Gleitens der Streifen pro Viertelperiode, andererseits die Interpolation zwischen jeder Umschaltung von A oder B der ununterbrochenen Variation der Phase der Streifen durch die Durchführung des Arkustangens von (S1 / S2) ermöglichen, um die zwei Ergebnisse - Zählung plus Interpolation - hinzuzufügen, um eine ununterbrochene, schnelle, hoch auflösende Messung in einem großen Variationsbereich des Durchmessers bereitzustellen.

**5.** Verfahren nach einem der Ansprüche 1 bis 4, **dadurch gekennzeichnet, dass** es außerdem die Schritte umfasst, die darin bestehen, den Verlust des Kontrasts der Streifen zu verwenden, um in Echtzeit auf analogem Weg das Vorhandensein von Defekten in der Faser nachzuweisen und durch die Verwendung der Differenz der Amplituden des Modells und des tatsächlichen Signals durch digitale Behandlung die sehr kleinen Defekte festzustellen

**Claims**

**1.** A method for measuring the diameter of an optical fiber and for detecting defects in this fiber, comprising the steps consisting in:

- directing a laser beam perpendicularly to the axis of the fiber, to create a system of interference fringes;
- providing a first sensor (6) capable of receiving the fringe system and a first digital processing board (8) capable of analyzing the signal emitted by the first sensor (6);

**characterized in that** the method further comprises the steps consisting in :

- providing a second sensor (7) capable of receiving the fringe system and a second analogue processing board (9) capable of analyzing the signal emitted by the second sensor (7);
- angularly calibrating the first and second sensors (6, 7);
- achieving an absolute and periodic measurement of the diameter (D) of the fiber by determining, by means of the first sensor (6) and of the first processing board (8), parameters A, B, D, $\varphi$ allowing the optimal identification of the fringe system and of the following physical model:

$$M = \frac{A}{B+\theta} \times [1 + sin^2\{N(D,\theta) \times \pi + \varphi\}] \qquad (7)$$

$$N(D,\theta) = \frac{D}{\lambda} \times [sin\frac{\theta}{2} + (n^2 + 1 - 2n \times cos\frac{\theta}{2})^{1/2}] + \frac{1}{4} \qquad (5), (4)$$

where M is the amplitude of the signal measured by the first sensor (6), N is the number of fringes, $\lambda$ is the wavelength of the laser and $\theta$ is the angle of measurement;

- in parallel, achieving a relative and continuous measurement of the variations of the diameter (D) of the fiber by analysis, by means of the second sensor (7) and of the second processing board (9), of the shift of the fringes, according to the following relationship:

$$dD = - \lambda \times \frac{dN}{sin\frac{\theta}{2} + \left( n^2 + 1 - 2n \times cos\frac{\theta}{2} \right)^{1/2}} \qquad (9), (4)$$

said second processing board (9), which is analogue, being initialized by said first processing board (8), which is digital, so that the method allows obtaining a quick, continuous, and absolute measurement of the diameter (D) of the fiber.

2. The method according to claim 1, **characterized in that** an optical system (4) is provided, projecting a portion of the laser beams deviated by the optical fiber, at an angular range between 40 and 80°, on the two sensors (6, 7), said sensors (6, 7) being optically aligned and located in the focal plane of the optical system (4).

3. The method according to claim 1 or 2, **characterized in that** the step of angular calibration of the first and second sensors (6, 7) is carried out using a calibration bench external to the sensor, allowing to accurately identify the axis of the laser beam in order to reference the angular encoder, and to angularly deviate the laser by a mirror integral to the angular encoder, on several points of the sensors, through the optical system, in order to accurately identify the angular positions of these points.

4. The method according to any of claims 1 to 3, **characterized in that** it further comprises the steps consisting in comparing two analogue signals (S1, S2) of the second sensor (7) to generate two logic signals (A, B) allowing, on the one hand, the digital counting of the shift of the fringes by quarter period, on the other hand, interpolating between each switching of A or B the continuous variation of the phase of the fringes by carrying out the arctangent of (S1 / S2), finally adding the two results - counting plus interpolation - to afford a quick, continuous and high-resolution measurement, in a wide variation range of the diameter.

5. The method according to any of claims 1 to 4, **characterized in that** it further comprises the steps consisting in using the loss of the fringes contrast to detect, in real time, by analogue means, the presence of defects in the fiber and by the use of the amplitudes difference of the model and of the real signal to detect, by digital processing, the very small defects.

**figure 1**

Rt

Rt1

Rlim.1

α

N₁

N₂

Rto

R

r

Rr

Rlim.2

θ

Rt

**Figure 2**

3

2

1

1

Axe de la
fibre optique

5

Faisceaux déviès
par la fibre et captés
par l'optique 4

4

6

7

**Signal normal pour une fibre verre de 125µm**      **Figure 3**

**Figure 4**   **Signal d'une fibre de 125µm sans "coating" avec 4,8µm d'"airline" au centre**

**Figure 5**      **Signal de perturbation**

**Figure 6**

S1 → Traitement analogique → A1 → Compteur décompteur → Convertisseur D/A → Sortie analogique rapide

S2 →

Additionneur → Sortie numérique rapide 12 bits

8 bits

4 bits

Convertisseur D/A

S1  -S1  S2  -S2

Multiplexeur double → s1 / s2 → Arctg(s1/s2)

A1 = 1 si S2-S1>0

A2 = 1 si S1+S2<0

**Figure 7**

C'1  C'4  C'3  C'2

C1 C2 C3 C4

S1  S2

1  2  3  4

Arctg(s1/s2)

D

EP 1 131 599 B1

Figure 8

**Evolution de la période**

Figure 9

14

**Figure 10**

1

3

14

2

10

Axe de la
fibre optique

Position de calage
du miroir

11

12

Position de
référence de
l'axe laser

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3982816 A, Laurence S. Watkins
- US 4027977 A, Ralph E. Frazee
- US 4280827 A, Edward F. Murphy
- US 4176961 A, Ralph E. Frazee
- EP 0549914 B1, Button Leslie James
- US 5513004 A

**Littérature non-brevet citée dans la description**

- **LIONEL DELAUNAY.** *Thèse de l'université de Saint-Etienne,* 28 Mars 1986